# EUROPÄISCHE PATENTSCHRIFT

(11) **EP 3 815 975 B1**
(45) Veröffentlichungstag und Bekanntmachung des Hinweises auf die Patenterteilung: **02.08.2023**
(21) Anmeldenummer: 20203879.0
(22) Anmeldetag: 26.10.2020
(51) Int. Cl.: B60Q 9/00, B60W 50/14, G08G 1/16, G01S 13/931

(54) **SELBSTFAHRENDE LANDMASCHINE UND VERFAHREN ZUR UNTERSTÜTZUNG EINES FAHRERS EINER SELBSTFAHRENDEN LANDMASCHINE BEIM FÜHREN DER LANDMASCHINE**
SELF-PROPELLED AGRICULTURAL MACHINE AND METHOD FOR SUPPORTING A DRIVER OF A SELF-PROPELLED AGRICULTURAL MACHINE WHEN DRIVING THE AGRICULTURAL MACHINE
MACHINE AGRICOLE AUTONOME ET PROCÉDÉ D'AIDE À LA CONDUITE D'UNE MACHINE AGRICOLE AUTONOME LORS DE LA CONDUITE DE LA MACHINE AGRICOLE

(30) Priorität: 28.10.2019 DE 102019216584
(43) Veröffentlichungstag der Anmeldung: 05.05.2021
(73) Patentinhaber: Continental Automotive Technologies GmbH, 30165 Hannover (DE)
(72) Erfinder: Ohm, Heinz-Friedrich - c/o Continental Automotive GmbH, 65824 Schwalbach a. Ts. (DE); Roskoni, Ulrich - c/o Continental Automotive GmbH, 65824 Schwalbach a. Ts. (DE); Berger, Jens - c/o Continental Automotive GmbH, 65824 Schwalbach a. Ts. (DE); Kliewer, Georg - c/o Continental Automotive GmbH, 65824 Schwalbach a. Ts. (DE)
(74) Vertreter: Continental Corporation

(56) Entgegenhaltungen:
- EP-A1- 0 655 142
- EP-A1- 1 261 957
- EP-A1- 2 763 123
- EP-A2- 2 288 533
- JP-A- 2014 211 332
- US-A1- 2004 114 262
- US-A1- 2018 134 217
- US-A1- 2019 176 819
- US-B2- 7 880 596

## Beschreibung

Die Erfindung bezieht sich auf eine selbstfahrende Landmaschine mit einem Anhänger und/oder mit einem Anbaugerät, mit einem Seitenaußenspiegel und mit einer Umfelderfassungseinrichtung. Darüber hinaus bezieht sich die Erfindung auf ein Verfahren zur Unterstützung eines Fahrers einer selbstfahrenden Landmaschine beim Führen der Landmaschine.

Eine vorgenannte selbstfahrende Landmaschine und ein vorgenanntes Verfahren sind bekannt, wobei der Seitenaußenspiegel unter anderem dazu dient, eine Kollision der Landmaschine mit anderen Objekten im Verkehrsraum zu vermeiden. Mittels des Seitenaußenspiegels hat der Fahrer der Landmaschine die Möglichkeit, z. B. den rückwärtigen Verkehr hinter der Landmaschine zu beobachten und insbesondere ein Linksabbiegen der Landmaschine zu unterlassen, wenn diese auf ihrer linken Seite von einem anderen Verkehrsteilnehmer überholt wird. Als schwierig hat es sich erwiesen, dass das mittels des Seitenaußenspiegels abbildbare rückwärtige Blickfeld des Fahrers durch den Anhänger oder das Anbaugerät erheblich eingeschränkt sein kann. Dadurch besteht die Gefahr, dass der Fahrer der Landmaschine nicht die Möglichkeit hat, ein sich der Landmaschine von hinten näherndes, ggf. zum Überholen ansetzendes Fahrzeug rechtzeitig zu erkennen und so möglicherweise einen Abbiegevorgang der Landmaschine einleitet, der im Weiteren zu einer Kollision mit dem überholenden Fahrzeug führt. So kommt es vor allem in ländlichen Gebieten immer wieder zu Unfällen beim Überholen von Agrarmaschinen, insbesondere beim Überholen von abbiegenden Agrarmaschinen.

Der Erfindung liegt daher die Aufgabe zugrunde, eine selbstfahrende Landmaschine zu schaffen, die es ermöglicht, eine Kollision bei einem Abbiegen der Landmaschine mit einem die Landmaschine überholenden Fahrzeug auf eine zuverlässige Weise zu vermeiden. Darüber hinaus liegt der Erfindung die Aufgabe zugrunde, ein Verfahren zur Unterstützung eines Fahrers einer selbstfahrenden Landmaschine beim Führen der Landmaschine anzugeben, welches es ermöglicht, eine derartige Kollision auf eine zuverlässige Weise zu vermeiden.

Die erstgenannte Aufgabe wird erfindungsgemäß mit einer selbstfahrenden Landmaschine nach Anspruch 1 dadurch gelöst, dass die Umfelderfassungseinrichtung einen Radarsensor aufweist, wobei der Radarsensor an dem Seitenaußenspiegel und derart angeordnet ist, dass ein Erfassungsbereich des Radarsensors nach hinten seitlich entlang des Anhängers bzw. des Anbaugeräts und über den Anhänger bzw. das Anbaugerät hinaus ausgerichtet ist. Von besonderem Vorteil bei der Erfindung ist, dass mittels des Radarsensors am Seitenaußenspiegel für den Fahrer eine Beobachtung des Verkehrsraums nach hinten an dem gesamten Gespann aus Landmaschine und Anhänger bzw. Anbaugerät vorbei möglich ist. Hierzu sind vorteilhaft keine zusätzlichen Sensoren am Anhänger oder an dem Anbaugerät, z. B. an einer Rückseite des Anhängers oder an der Rückseite des Anbaugeräts, erforderlich. Damit ist auch keine zusätzliche Daten- oder Signalverbindung zwischen der Landmaschine und dem Anhänger bzw. dem Anbaugerät zur Verbindung eines solchen zusätzlichen Sensors mit der Landmaschine notwendig. Durch die Anordnung des Radarsensors an der Landmaschine selbst, nämlich an dem Seitenaußenspiegel der Landmaschine, ist zudem in besonders einfacher Weise eine Nachrüstung der Landmaschine mit dem Radarsensor möglich. Damit kann die Erfindung besonders vorteilhaft auch an bereits hergestellten, vorhandenen Landmaschinen nach einer entsprechenden Nachrüstung der Landmaschine verwendet werden und zum Einsatz kommen. Die Erfindung kann vorteilhaft dazu beitragen, dass Kollisionen eines Gespanns, das gebildet ist aus der selbstfahrenden Landmaschine mit dem Anhänger, bzw. eines Gespanns, das gebildet ist aus der selbstfahrenden Landmaschine mit dem Anbaugerät, vermieden werden.

Die erfindungsgemäße selbstfahrende Landmaschine ist eine Landmaschine mit einem eigenen Antrieb für ihren Vortrieb und wird üblicherweise von einem Fahrer geführt. Grundsätzlich könnte es sich bei der selbstfahrenden Landmaschine aber auch um eine autonom oder teil-autonom fahrende Landmaschine handeln. Die Landmaschine kann z. B. ein Schlepper, ein Traktor, ein Trecker, ein Mähdrescher, ein Maishäcksler oder jede beliebige andere, vorzugsweise von einem Fahrer geführte, Landmaschine sein. Bei dem Anbaugerät kann es sich beispielsweise um eine Sämaschine, eine Drillmaschine, ein Bodenbearbeitungsgerät oder ein beliebiges anderes, an die Landmaschine angebautes Gerät handeln. Das Anbaugerät ist ein Heck-Anbaugerät. Es kann insbesondere an einem Heck-Dreipunkt-Kraftheber der Landmaschine angeordnet sein.

Der Radarsensor der Umfelderfassungseinrichtung dient zur Erfassung eines Teils des Umfelds der Landmaschine, und zwar insbesondere zur Erfassung sich von hinten der Landmaschine nähernder Fahrzeuge. Insbesondere dient der Radarsensor zur Erfassung sich seitlich von hinten der Landmaschine nähernder Fahrzeuge. Der Erfassungsbereich des Radarsensors ist vorzugsweise keulen- oder kegelförmig ausgebildet. Der Erfassungsbereich ist entlang des Anhängers bzw. des Anbaugeräts ausgerichtet und reicht über den Anhänger bzw. das Anbaugerät nach hinten hinaus. Vorzugsweise kann der Radarsensor herannahende Fahrzeuge auf eine Entfernung von in etwa 250 m detektieren. Der Radarsensor kann vorteilhaft z. B. in 77-Gigahertz-Technologie betrieben werden. Mittels des Radarsensors kann sowohl ein Abstand zu einem von hinten herannahenden Fahrzeugs als auch dessen Geschwindigkeit bestimmt werden.

Vorteilhat ist es, wenn in Ländern oder Regionen, wie z. B. Kontinentaleuropa, in denen Rechtsverkehr herrscht, der Seitenaußenspiegel ein linker Seitenaußenspiegel der Landmaschine ist und der Radarsensor somit an dem linken Seitenaußenspiegel angeordnet ist. In Regionen oder Ländern, wie z. B. dem Vereinigten Königreich, in denen Linksverkehr herrscht, ist es vorteilhaft, wenn der Seitenaußenspiegel ein rechter Seitenaußenspiegel der Landmaschinen ist und der Radarsensor somit an dem rechten Seitenaußenspiegel angeordnet ist. Besonders vorteilhaft ist es, wenn sowohl an dem linken Seitenaußenspiegel als auch an dem rechten Seitenaußenspiegel ein entsprechender Radarsensor angeordnet ist. Auf diese Weise kann mit Hilfe der Erfindung z. B. sowohl im Falle eines die Landmaschine mit dem Anhänger bzw. mit dem Anbaugerät links überholenden Fahrzeugs als auch im Falle eines rechts überholenden Fahrzeugs gewarnt werden.

Mit der Erfindung können vor allem Kollisionen bei einem als besonders riskant geltenden Abbiegen (vor allem Linksabbiegen bei geltendem Rechtsverkehr beziehungsweise Rechtsabbiegen bei geltendem Linksverkehr) von Landmaschinen auf öffentlichen Straßen mit anderen Verkehrsteilnehmern, insbesondere mit im Vergleich zur Landmaschine schnell fahrenden Verkehrsteilnehmern, vermieden werden. Vor allem Kollisionen mit ein Gespann aus Landmaschine mit Anhänger oder Anbaugerät überholenden schnell fahrenden Zweirädern und Personenkraftwagen können dabei unabhängig von Wetter- und Lichtverhältnissen zuverlässig vermieden werden.

Grundsätzlich könnte man sich z. B. vorstellen, dass der Radarsensor in die Spiegelfläche des Seitenaußenspiegels integriert ist oder hinter der Spiegelfläche des Seitenaußenspiegels, so dass die Radarstrahlen des Radarsensors die Spiegelfläche durchdringen, angeordnet ist. Hingegen ist gemäß einer vorteilhaften Weiterbildung der Erfindung der Radarsensor an einem Spiegelgehäuse des Seitenaußenspiegels oder an einem Spiegelhalterarm des Seitenaußenspiegels angeordnet. Auf diese Weise ist eine Nachrüstung der Landmaschine mit dem Radarsensor in besonders einfacher Weise möglich. Vorzugsweise ist mittels des Spiegelhaltearms der Seitenaußenspiegel an der Landmaschine befestigt.

Gemäß der Erfindung ist der Radarsensor in Querrichtung zu einer Fahrzeuglängsachse der Landmaschine bewegbar an der Landmaschine angeordnet. Dadurch kann die Reichweite des Erfassungsbereichs des Radarsensors bei einem besonders breiten Anhänger oder einem besonders breiten Anbaugerät zusätzlich vergrößert werden. Der Radarsensor kann z. B. verschiebbar und/oder verschwenkbar an der Landmaschine angeordnet sein. Vorzugsweise kann der Radarsensor gemeinsam mit dem Seitenaußenspiegel bewegbar an der Landmaschine angeordnet sein. Aufgrund der Bewegbarkeit des Radarsensors kann vorteilhaft eine Vergrößerung des Abstands des Radarsensors und ggf. des Seitenaußenspiegels von der Fahrzeuglängsachse erreicht werden. Damit kann gegebenenfalls auch erreicht werden, dass der Erfassungsbereich des Radarsensors nicht nur nach hinten seitlich entlang des Anhängers bzw. des Anbaugeräts und darüber hinaus ausgerichtet ist, sondern dass der Erfassungsbereich außerdem auch einen Randbereich unmittelbar hinter dem Anhänger bzw. Anbaugerät mit abdeckt.

Einer anderen vorteilhaften Weiterbildung der Erfindung entsprechend weist der Radarsensor in einer Horizontalebene nach außen, d. h. von der Landmaschine weg, gewandt einen sich über einen Winkel von mindestens 50°, vorteilhaft mindestens 60°, erstreckenden Erfassungsbereich ausgehend von der den Radarsensor schneidenden, parallel zu der Fahrzeuglängsachse verlaufenden Horizontalen auf. Damit deckt der Erfassungsbereich des Radarsensors auch seitlich nach hinten gerichtet einen großen Raum ab, so dass auch die Landmaschine mit einer hohen Geschwindigkeit überholenden Fahrzeuge zuverlässig erfasst werden können.

Gemäß einer anderen vorteilhaften Weiterbildung der Erfindung weist der Radarsensor in einer Vertikalebene nach unten, d. h. zum Erdboden hin, gewandt einen sich über einen Winkel von mindestens 5°, vorteilhaft mindestens 10°, weiter vorteilhaft mindestens 20°, erstreckenden Erfassungsbereich ausgehend von der den Radarsensor schneidenden, parallel zu der Fahrzeuglängsachse verlaufenden Horizontalen auf. Damit kann auch ein Bereich im Erdbodennähe von dem Radarsensor noch erfasst werden, ohne dass im Falle eines keulen- oder kegelförmig ausgebildeten Erfassungsbereichs des Radarsensors der Erfassungsbereich des Radarsensors im Bezug auf seine nach hinten gerichtete Weite möglicherweise unerwünscht vermindert wäre.

Man könnte sich vorstellen, dass im Falle eines von dem Radarsensor erfassten Fahrzeugs mittels einer Steuereinrichtung automatisch in die Fahrt der Landmaschine eingegriffen wird, z. B. eine Bremsanlage der Landmaschine automatisch betätigt wird. Für eine zielgerichtete Unterstützung eines Fahrers der Landmaschine bei gleichzeitig zuverlässiger Kollisionsvermeidung ist es hingegen besonders vorteilhaft, wenn gemäß einer anderen Weiterbildung der Erfindung der Radarsensor mit einer von einem Steuergerät der Landmaschine angesteuerten Ausgabeeinrichtung der Landmaschine verbunden ist, wobei das Steuergerät derart ausgebildet ist, dass bei einem sich seitlich von hinten der Landmaschine nähernden, von dem Radarsensor erfassten Fahrzeug und bei gleichzeitig auf der Seite der Landmaschine, auf welcher sich das Fahrzeug nähert, gesetztem Blinker der Landmaschine die Ausgabeeinrichtung derart angesteuert wird, dass ein Warnsignal ausgegeben wird. Dem Fahrer wird somit die Möglichkeit gegeben, auf das Warnsignal in angemessener Weise, z. B. durch Verlangsamung der Fahrt der Landmaschine und durch Rücknahme des Setzens des Blinkers, zu reagieren.

Gemäß einer vorteilhaften Weiterbildung der Erfindung weist die Ausgabeeinrichtung einen Geräuschgenerator und/oder eine Leuchte auf. Sowohl ein solcher Geräuschgenerator, der zur Ausgabe eines akustischen Warnsignals dient und z. B. ein Summer sein kann, als auch eine solche Leuchte, die zur Ausgabe eines optischen Warnsignals dient und z. B. eine Signallampe oder beispielsweise ein Signalfeld auf einem Bildschirm an einem Fahrerarbeitsplatz der Landmaschine sein kann, bietet den besonderen Vorteil, dass die Landmaschine in einfacher Weise mit diesem bzw. dieser nachgerüstet werden kann.

Einer anderen vorteilhaften Weiterbildung der Erfindung gemäß weist die Umfelderfassungseinrichtung eine Außenkamera auf. Die Außenkamera kann den Radarsensor ergänzen und so vorteilhaft zu einer weiteren Verbesserung der Kollisionsvermeidung beitragen.

Die oben zweitgenannte Aufgabe wird erfindungsgemäß gelöst mit einem Verfahren nach Anspruch 8 wobei mittels eines Radarsensors ein sich von hinten der Landmaschine näherndes Fahrzeug erfasst wird, wobei geprüft wird, ob ein Blinker der Landmaschine gesetzt ist, und wobei ein Warnsignal an den Fahrer ausgegeben wird, wenn das Fahrzeug als sich auf der Seite der Landmaschine nähernd erfasst wird, auf welcher der Blinker gesetzt ist.

Mittels des Radarsensors wird dabei ein sich seitlich von hinten der Landmaschine näherndes Fahrzeug erfasst. Ein entsprechendes Warnsignal wird aber nur dann ausgegeben, wenn auch eine Abbiegeabsicht oder ein Abbiegewunsch des Fahrers erkannt wird. Das wird dann als gegeben angesehen, wenn ein Blinker der Landmaschine gesetzt ist, und zwar wenn der Blinker auf der Seite der Landmaschine gesetzt ist, auf welcher bzw. von welcher sich das Fahrzeug von hinten nähert. Somit wird z. B. dann ein Warnsignal ausgegeben und es erfolgt damit eine Warnung, wenn sich beispielsweise ein Fahrzeug von links hinten der Landmaschine nähert, z. B. ein zum Überholen der Landmaschine ansetzendes Fahrzeug, und gleichzeitig an der Landmaschine der Blinker links gesetzt ist. Gemäß einer vorteilhaften Weiterbildung der Erfindung wird geprüft, ob eine Lenkung der Landmaschine eingeschlagen ist, und das Warnsignal wird nur dann an den Fahrer ausgegeben, wenn die Lenkung zu der Seite hin eingeschlagen ist, auf welcher der Blinker gesetzt ist. Auf diese Weise kann die Anzahl der Warnsignale reduziert und somit einer Gefahr einer möglichen Reizüberflutung des Fahrers vorgebeugt werden, ohne dass die Zuverlässigkeit des Verfahrens leidet. Eine Warnung durch Ausgabe des Warnsignals an den Fahrer erfolgt beispielsweise dann, wenn sich ein Fahrzeug von links hinten der Landmaschine nähert, z. B. ein zum Überholen der Landmaschine ansetzendes Fahrzeug, und gleichzeitig an der Landmaschine der Blinker links gesetzt ist sowie die Lenkung der Landmaschine nach links eingeschlagen ist.

Die oben zweitgenannte Aufgabe wird erfindungsgemäß auch gelöst mit einem Verfahren nach Anspruch 10 wobei mittels eines Radarsensors ein sich von hinten der Landmaschine näherndes Fahrzeug erfasst wird, wobei geprüft wird, ob das Fahrzeug seine Geschwindigkeit verringert, und wobei ein Warnsignal an den Fahrer ausgegeben wird, wenn das Fahrzeug seine Geschwindigkeit nicht verringert und wenn das Fahrzeug als sich auf einer Seite der Landmaschine nähernd erfasst wird, auf welcher ein Freiraum für das Fahrzeug neben der Landmaschine vorhanden ist.

Mittels des Radarsensors wird dabei ein sich seitlich von hinten der Landmaschine näherndes Fahrzeug erfasst. Ein entsprechendes Warnsignal wird aber nur dann ausgegeben, wenn das Fahrzeug seine Geschwindigkeit nicht verringert und gleichzeitig ein Freiraum neben der Landmaschine auf der Seite der Landmaschine vorhanden ist, auf welcher bzw. von welcher sich das Fahrzeug von hinten nähert. Dass das Fahrzeug seine Geschwindigkeit nicht verringert umfasst auch, dass das Fahrzeug seine Geschwindigkeit gegebenenfalls erhöht, das heißt beschleunigt. Ist der Freiraum vorhanden, so ist er in Ländern oder Regionen, in denen Rechtsverkehr herrscht, typischerweise links neben der Landmaschine vorhanden, und in Ländern oder Regionen, in denen Linksverkehr herrscht, ist der Freiraum - wenn vorhanden - typischerweise rechts neben der Landmaschine vorhanden. Aufgrund der nicht verringerten (oder gar sich erhöhenden) Geschwindigkeit des Fahrzeugs und des vorhandenen Freiraums wird davon ausgegangen, dass das Fahrzeug - den Freiraum nutzend - beabsichtigt, die Landmaschine zu überholen. Der Fahrer der Landmaschine, der möglicherweise ein Abbiegen der Landmaschine erwägt, wird somit bereits im Vorhinein durch das Warnsignal gewarnt. Die Warnung kann zum Beispiel gestuft erfolgen: Dabei kann z. B. in einem ersten Schritt ein optisches Warnsignal ausgegeben werden, um den Fahrer für eine mögliche Kollisionsgefahr zu sensibilisieren. In einem zweiten Schritt, z. B. wenn sich das Fahrzeug weiter mit unverminderter (oder sich erhöhender) Geschwindigkeit nähert und/oder wenn zusätzlich ein Blinker der Landmaschine auf der Seite, auf welche der Freiraum vorhanden ist, gesetzt wird, kann beispielsweise zusätzlich ein akustisches Warnsignal ausgegeben werden. Es ist vorstellbar, dass auch geprüft wird, ob eine Lenkung der Landmaschine eingeschlagen ist, und dass das Warnsignal nur dann an den Fahrer ausgegeben wird, wenn die Lenkung zu der Seite hin eingeschlagen ist, auf welcher der Freiraum vorhanden ist.

Es ist z. B. denkbar, dass ein haptisches Warnsignal an den Fahrer ausgegeben wird. Hingegen ist es von besonderem Vorteil für eine gute Wahrnehmbarkeit des Warnsignals durch den Fahrer, wenn gemäß einer anderen Weiterbildung der Erfindung das Warnsignal optisch und/oder akustisch an den Fahrer ausgegeben wird. Das Warnsignal kann gestuft an den Fahrer ausgegeben werden; z. B. kann das Warnsignal in einem ersten Schritt optisch an den Fahrer ausgegeben werden und in einem zweiten Schritt, beispielsweise bei weiter anhaltender Kollisionsgefahr, optisch und akustisch.

Zusätzlich kann bei den beschriebenen Verfahren mittels des Radarsensors auch eine Überholabsicht des sich von hinten der Landmaschine nähernden Fahrzeugs beurteilt und eingeschätzt werden. So kann zum Beispiel dann, wenn sich die Geschwindigkeit des Fahrzeugs verringert, vermutet werden, dass eine Überholabsicht des Fahrzeugs nicht besteht. Dabei kann auch der Abstand zwischen Landmaschine und sich näherndem Fahrzeug berücksichtigt werden, so dass beispielsweise nur dann von einer fehlenden Überholabsicht ausgegangen wird, wenn der Abstand groß ist und sich die Geschwindigkeit des Fahrzeugs verringert. Außerdem können die beschriebenen Verfahren auch zusätzlich zum Ausgeben des Warnsignals an den Fahrer einen Schritt aufweisen, in welchem die Landmaschine - zum Beispiel, wenn der Fahrer das Warnsignal ignoriert - automatisch abgebremst wird.

Besonders vorteilhaft sind die erfindungsgemäßen Verfahren dann, wenn die selbstfahrende Landmaschine Bestandteil eines Gespanns aus der selbstfahrenden Landmaschine und einem Anhänger oder eines Gespanns aus der selbstfahrenden Landmaschine und einem Anbaugerät ist. Dabei können die erfindungsgemäßen Verfahren z. B. eine durch den Anhänger bzw. das Anbaugerät eingeschränkte Sicht des Fahrers der Landmaschine nach hinten ausgleichen.

Zu der Erfindung gehören auch Weiterbildungen der erfindungsgemäßen Verfahren, die Merkmale aufweisen, wie sie bereits im Zusammenhang mit den Weiterbildungen der erfindungsgemäßen Landmaschine beschrieben worden sind und umgekehrt. Aus diesem Grund sind die entsprechenden Weiterbildungen der erfindungsgemäßen Verfahren und der erfindungsgemäßen Landmaschine hier nicht noch einmal beschrieben.

Die Erfindung umfasst auch die Kombinationen der Merkmale der beschriebenen Ausführungsformen.

Ausführungsbeispiele der Erfindung sind in der Zeichnung skizzenhaft und schematisiert dargestellt und werden im Folgenden näher beschrieben. Es zeigen:
- Figur 1: eine selbstfahrende Landmaschine mit einem Anhänger und einem Radarsensor in einer Draufsicht und
- Figur 2: eine selbstfahrende Landmaschine mit einem Anhänger und einem Radarsensor in einer Seitenansicht.

Sich jeweils entsprechende Elemente sind in allen Figuren mit gleichen Bezugszeichen versehen.

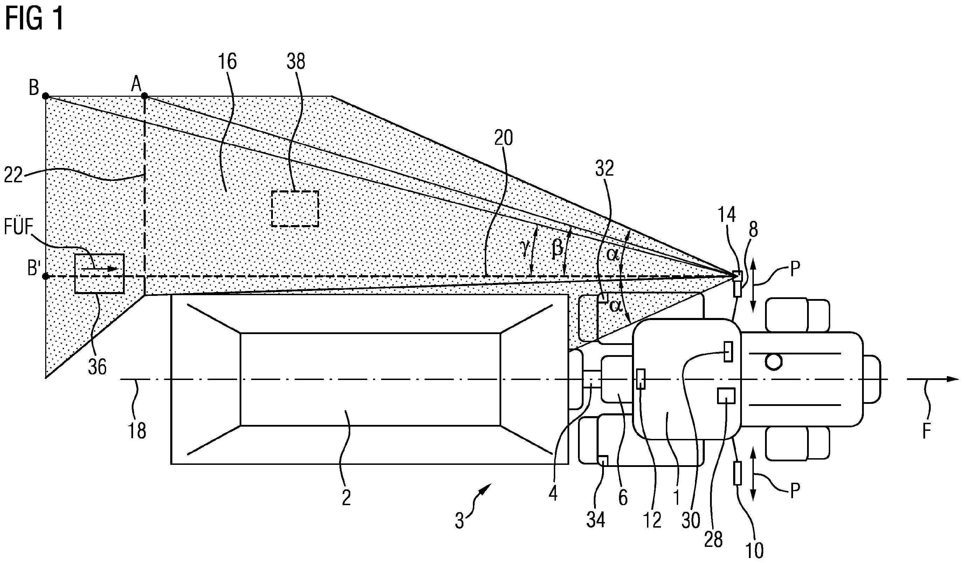

Figur 1 zeigt in einer schematisierten, skizzenhaften Draufsicht eine selbstfahrende Landmaschine 1 mit einem Anhänger 2. Der Anhänger 2 ist an eine Anhängekupplung 4 der Landmaschine 1, die in diesem Ausführungsbeispiel ein Schlepper ist, angekuppelt. Anstelle des Anhängers 2 oder zusätzlich zu diesem könnte beispielsweise auch ein hier nicht dargestelltes Anbaugerät an einem Heck-Dreipunkt-Kraftheber 6 der Landmaschine 1 angekuppelt sein. Die Landmaschine 1 bildet mit dem Anhänger 2 ein Gespann 3. Ein entsprechendes, nicht dargestelltes Gespann würde die Landmaschine auch mit dem Anbaugerät bzw. mit dem Anhänger und mit dem Anbaugerät bilden. Eine Fahrtrichtung F der Landmaschine 1 mit dem Anhänger 2 ist in Figur 1 durch einen Pfeil symbolisiert.

Die Landmaschine 1 weist einen linken Seitenaußenspiegel 8 und einen rechten Seitenaußenspiegel 10 sowie eine Umfelderfassungseinrichtung auf. In diesem Ausführungsbeispiel weist die Umfelderfassungseinrichtung der Landmaschine 1 eine Außenkamera 12 auf. Mittels der Außenkamera 12 kann beispielsweise unter anderem eine Bewegung des Anhängers 2 oder eines an dem Heck-Dreipunkt-Kraftheber 6 angeordneten Anbaugeräts erfasst werden. Außerdem kann mittels der Außenkamera 12 z. B. ein Teil des rückwärtigen Verkehrsraums der Landmaschine 1 erfasst werden.

Außerdem weist die Umfelderfassungseinrichtung einen Radarsensor 14 auf, der an dem linken Seitenaußenspiegel 8 angeordnet ist. Der Radarsensor 14 ist derart an dem Seitenaußenspiegel angeordnet, dass ein Erfassungsbereich 16 des Radarsensors 14 nach hinten seitlich entlang des Anhängers 2 und über den Anhänger 2 hinaus ausgerichtet ist. Der linke Seitenaußenspiegel 8 ist - wie durch einen Doppelpfeil P angedeutet - bewegbar an der Landmaschine 1 angeordnet. Gemeinsam mit dem linken Seitenaußenspiegel 8 ist somit auch der Radarsensor 14 bewegbar an der Landmaschine 1 angeordnet.

In dem hier gezeigten Ausführungsbeispiel erstreckt sich der Erfassungsbereich 16 ausgehend von der den Radarsensor 14 schneidenden, parallel zu der Fahrzeuglängsachse 18 verlaufenden Horizontalen 20 in einer Horizontalebene nach außen, das heißt von der Landmaschine 1 weg, über einen Winkel α von etwa 60°. Unter einem Winkel β von etwa 9° gegenüber der Horizontalen 20 erreicht der Erfassungsbereich 16 des Radarsensors 14 noch einen Punkt A, der in etwa 150 m nach hinten von dem Radarsensor 14 entfernt ist. Punkte B, B', die in etwa 250 m nach hinten von dem Radarsensor 14 entfernt sind, werden von dem Erfassungsbereich 16 unter einem Winkel γ von in etwa 4° noch erreicht.

Die Punkte A, B sind virtuell an einem linken äußeren Fahrbahnrand einer Fahrbahn, auf der sich die Landmaschine 1 befindet, angeordnet. Mit Hilfe der unterschiedlichen Winkel α, β, γ wird in Figur 1 schematisiert eine Keulencharakteristik des Erfassungsbereichs 16 des Radarsensors 14 angedeutet. Eine gestrichelte, quer zu der Landmaschine 1 und deren Fahrzeuglängsachse 18 angeordnete Linie 22 symbolisiert eine gegenüber der dargestellten Größe der Landmaschine 1 mit dem Anhänger 2 unmaßstäblich große Längserstreckung des Erfassungsbereichs 16 des Radarsensors 14 nach hinten, das heißt in rückwärtige Richtung der Landmaschine 1.

Außer dem linken Seitenaußenspiegel 8 weist die Landmaschine 1 auch den rechten Seitenaußenspiegel 10 auf. Der rechte Seitenaußenspiegel 10 ist ebenfalls bewegbar an der Landmaschine 1 angeordnet. An dem rechten Seitenaußenspiegel 10 kann ein dem Radarsensor 14 am linken Seitenaußenspiegel 8 entsprechender Radarsensor angeordnet sein.

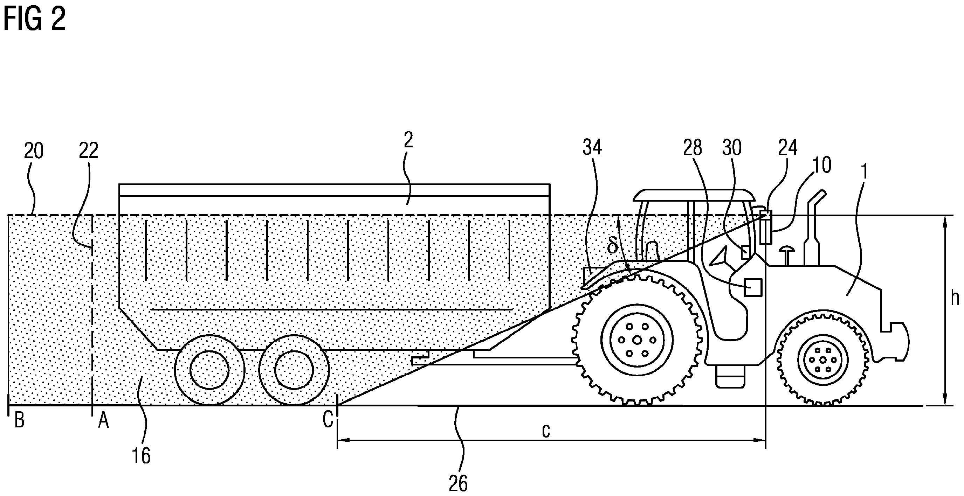

Eine ähnliche Landmaschine 1 mit einem Anhänger 2 wie in Figur 1 ist in Figur 2 in einer schematisierten, skizzenhaften Seitenansicht gezeigt. Diese Landmaschine 1 weist an einem rechten Seitenaußenspiegel 10 einen dem Radarsensor 14 in Figur 1 entsprechenden Radarsensor 24 auf. Eine Ausstattung der Landmaschine 1 mit dem Radarsensor 24 an dem rechten Seitenaußenspiegel 10 ist besonders interessant zum Beispiel für Länder, in welchen Linksverkehr herrscht. Hier besteht eine besondere Kollisionsgefahr, die es zu vermeiden gilt, bei rechtsabbiegenden Landmaschinen mit rechtsüberholenden Fahrzeugen. Grundsätzlich kann sowohl die Landmaschine 1 nach Figur 1 als auch die Landmaschine 1 nach Figur 2 sowohl mit dem Radarsensor 14 an dem linken Seitenaußenspiegel als auch mit dem Radarsensor 24 an dem rechten Seitenaußenspiegel 10 ausgestattet sein.

Der Radarsensor 24 ist an dem rechten Seitenaußenspiegel 10 der Landmaschine 1 nach Figur 2 in einer Höhe h von beispielsweise in etwa 3 m, zum Beispiel 3,05 m, angeordnet. Der Radarsensor 24 weist in einer Vertikalebene nach unten, das heißt zum Erdboden 26, der auch von einer Fahrbahn gebildet sein kann, hin, gewandt einen sich über einen Winkel δ von in diesem Ausführungsbeispiel 10° erstreckenden Erfassungsbereich 16 ausgehend von der den Radarsensor 24 schneidenden, parallel zu der Fahrzeuglängsachse verlaufenden Horizontalen 20 auf.

Auch in Figur 2 ist eine die in Bezug auf die dargestellte Größe der Landmaschine 1 große Längserstreckung des Erfassungsbereichs 16 symbolisierende gestrichelte Linie 22 eingezeichnet. Außerdem sind entsprechend Figur 1 ein Punkt A in einer Entfernung von in etwa 150 m von dem Radarsensor 24 und ein Punkt B in einer Entfernung von in etwa 250 m von dem Radarsensor 24 eingezeichnet. Bis zu einem Punkt C auf dem Erdboden 26 in einem Abstand c von dem Radarsensor 24 reicht der Erfassungsbereich 16 des Radarsensors 24 neben dem Anhänger 2.

Sowohl der Radarsensor 14 nach Figur 1 als auch der Radarsensor 24 nach Figur 2 ist mit einer von einem Steuergerät 28 der Landmaschine 1 angesteuerten Ausgabeeinrichtung 30 der Landmaschine 1 verbunden. Das Steuergerät 28 ist derart ausgebildet, dass bei einem sich sichtlich von hinten der Landmaschine 1 nähernden, von dem Radarsensor 24 erfassten Fahrzeug 36, z. B. einem Zweirad oder Personenkraftwagen, und bei gleichzeitig auf der Seite der Landmaschine 1, auf welcher sich das Fahrzeug 36 nähert, gesetztem Blinker 32, 34 der Landmaschine 1 die Ausgabeeinrichtung 30 derart angesteuert wird, dass ein Warnsignal an einen Fahrer der Landmaschine 1 ausgegeben wird. Das Fahrzeug 36 ist - ebenso wie ein Freiraum 38, welcher für das Fahrzeug 36 hier neben der Landmaschine 1 vorhanden ist - in Figur 1 lediglich zur Verdeutlichung und symbolhaft verkleinert dargestellt, seine Fahrtrichtung FÜF ist durch einen Fall symbolisiert.

Insgesamt zeigen die Beispiele, wie durch die Erfindung der Fahrer einer selbstfahrenden Landmaschine beim Führen der Landmaschine zur Vermeidung einer Kollision bei einem Abbiegen der Landmaschine mit einem die Landmaschine überholenden Fahrzeug unterstützt wird.

## Patentansprüche

1. Selbstfahrende Landmaschine (1) mit einem Anhänger (2) und/oder mit einem Anbaugerät, mit einem Seitenaußenspiegel (8, 10) und mit einer Umfelderfassungseinrichtung, **dadurch gekennzeichnet, dass** die Umfelderfassungseinrichtung einen Radarsensor (14, 24) aufweist, wobei der Radarsensor (14, 24) an dem Seitenaußenspiegel (8, 10) derart angeordnet ist dass ein Erfassungsbereich (16) des Radarsensors (14, 24) nach hinten seitlich entlang des Anhängers (2) bzw. des Anbaugeräts und über den Anhänger (2) bzw. das Anbaugerät hinaus ausgerichtet ist, so dass mittels des Radarsensors (14, 24) eine Beobachtung des Verkehrsraums nach hinten an dem gesamten Gespann (3) aus Landmaschine (1) und Anhänger (2) bzw. Anbaugerät vorbei möglich ist, wozu keine zusätzlichen Sensoren am Anhänger (2) oder am Anbaugerät erforderlich sind, und dass der Radarsensor (14, 24) in Querrichtung zu einer Fahrzeuglängsachse (18) der Landmaschine (1) bewegbar an der Landmaschine (1) angeordnet ist.

2. Landmaschine (1) nach Anspruch 1, **dadurch gekennzeichnet, dass** der Radarsensor (14, 24) an einem Spiegelgehäuse des Seitenaußenspiegels (8, 10) oder an einem Spiegelhaltearm des Seitenaußenspiegels (8, 10) angeordnet ist.

3. Landmaschine (1) nach einem der vorhergehenden Ansprüche, **dadurch gekennzeichnet, dass** der Radarsensor (14, 24) in einer Horizontalebene nach außen gewandt einen sich über einen Winkel (α) von mindestens 50° erstreckenden Erfassungsbereich (16) ausgehend von der den Radarsensor (14, 24) schneidenden, parallel zu der Fahrzeuglängsachse (18) verlaufenden Horizontalen (20) aufweist.

4. Landmaschine (1) nach einem der vorhergehenden Ansprüche, **dadurch gekennzeichnet, dass** der Radarsensor (14, 24) in einer Vertikalebene nach unten gewandt einen sich über einen Winkel (β) von mindestens 5° erstreckenden Erfassungsbereich (16) ausgehend von der den Radarsensor (14, 24) schneidenden, parallel zu der Fahrzeuglängsachse (18) verlaufenden Horizontalen (20) aufweist.

5. Landmaschine (1) nach einem der vorhergehenden Ansprüche, **dadurch gekennzeichnet, dass** der Radarsensor (14, 24) mit einer von einem Steuergerät (28) der Landmaschine (1) angesteuerten Ausgabeeinrichtung (30) der Landmaschine (1) verbunden ist, wobei das Steuergerät (28) derart ausgebildet ist, dass bei einem sich seitlich von hinten der Landmaschine (1) nähernden, von dem Radarsensor (14, 24) erfassten Fahrzeug (36) und bei gleichzeitig auf der Seite der Landmaschine (1), auf welcher sich das Fahrzeug (36) nähert, gesetztem Blinker (32, 34) der Landmaschine (1) die Ausgabeeinrichtung (30) derart angesteuert wird, dass ein Warnsignal ausgegeben wird.

6. Landmaschine (1) nach Anspruch 5, **dadurch gekennzeichnet, dass** die Ausgabeeinrichtung (30) einen Geräuschgenerator und/oder eine Leuchte aufweist.

7. Landmaschine (1) nach einem der vorhergehenden Ansprüche, **dadurch gekennzeichnet, dass** die Umfelderfassungseinrichtung eine Außenkamera (12) aufweist.

8. Verfahren zur Unterstützung eines Fahrers einer selbstfahrenden Landmaschine (1) nach einem der Ansprüche 1-7 beim Führen der Landmaschine (1), wobei die Landmaschine (1) Bestandteil eines Gespanns (3) aus der Landmaschine (1) und einem Anhänger (2) oder aus der Landmaschine (1) und einem Anbaugerät ist, wobei
- mittels eines an einem Seitenaußenspiegel (8, 10) der Landmaschine (1) angeordneten Radarsensors (14, 24) ein sich von hinten der Landmaschine (1) näherndes Fahrzeug (36) erfasst wird,
- geprüft wird, ob ein Blinker (32, 34) der Landmaschine (1) gesetzt ist,
- und ein Warnsignal an den Fahrer ausgegeben wird, wenn das Fahrzeug (36) als sich auf der Seite der Landmaschine (1) nähernd erfasst wird, auf welcher der Blinker (32, 34) gesetzt ist.

9. Verfahren nach Anspruch 8, wobei
- geprüft wird, ob eine Lenkung der Landmaschine (1) eingeschlagen ist, und
- das Warnsignal nur dann an den Fahrer ausgegeben wird, wenn die Lenkung zu der Seite hin eingeschlagen ist, auf welcher der Blinker (32, 34) gesetzt ist.

10. Verfahren zur Unterstützung eines Fahrers einer selbstfahrenden Landmaschine (1) nach einem der Ansprüche 1-7 beim Führen der Landmaschine (1), wobei die Landmaschine (1) Bestandteil eines Gespanns (3) aus der Landmaschine (1) und einem Anhänger (2) oder aus der Landmaschine (1) und einem Anbaugerät ist, wobei
- mittels eines an einem Seitenaußenspiegel (8, 10) der Landmaschine (1) angeordneten Radarsensors (14, 24) ein sich von hinten der Landmaschine (1) näherndes Fahrzeug (36) erfasst wird,
- geprüft wird, ob das Fahrzeug (36) seine Geschwindigkeit verringert,
- und ein Warnsignal an den Fahrer ausgegeben wird, wenn das Fahrzeug (36) seine Geschwindigkeit nicht verringert und wenn das Fahrzeug (36) als sich auf einer Seite der Landmaschine (1) nähernd erfasst wird, auf welcher ein Freiraum (38) für das Fahrzeug (36) neben der Landmaschine (1) vorhanden ist.

11. Verfahren nach einem der Ansprüche 8 bis 10, wobei das Warnsignal optisch und/oder akustisch an den Fahrer ausgegeben wird.

## Claims

1. Self-propelled agricultural machine (1) having a trailer (2) and/or having an attachment, with a side exterior mirror (8, 10) and with an environment detection device, **characterized in that** the environment detection device has a radar sensor (14, 24), wherein the radar sensor (14, 24) is arranged on the side exterior mirror (8, 10) in such a way that a detection region (16) of the radar sensor (14, 24) is aligned rearwards laterally along the trailer (2) and/or the attachment and beyond the trailer (2) and/or the attachment, so that it is possible to observe the traffic space to the rear past the entire outfit (3) comprising the agricultural machine (1) and trailer (2) and/or attachment by means of the radar sensor (14, 24), for which purpose no additional sensors are required on the trailer (2) or on the attachment, and **in that** the radar sensor (14, 24) is arranged on the agricultural machine (1) such that it can be moved in the transverse direction relative to a vehicle longitudinal axis (18) of the agricultural machine (1).

2. Agricultural machine (1) according to Claim 1, **characterized in that** the radar sensor (14, 24) is arranged on a mirror housing of the side exterior mirror (8, 10) or on a mirror holder arm of the side exterior mirror (8, 10).

3. Agricultural machine (1) according to one of the preceding claims, **characterized in that**, facing outwards in a horizontal plane, the radar sensor (14, 24) has a detection region (16) extending over an angle (α) of at least 50° starting from the horizontal line (20) intersecting the radar sensor (14, 24) and running parallel to the vehicle longitudinal axis (18).

4. Agricultural machine (1) according to one of the preceding claims, **characterized in that**, facing downwards in a vertical plane, the radar sensor (14, 24) has a detection region (16) extending over an angle (β) of at least 5° starting from the horizontal line (20) intersecting the radar sensor (14, 24) and running parallel to the vehicle longitudinal axis (18).

5. Agricultural machine (1) according to one of the preceding claims, **characterized in that** the radar sensor (14, 24) is connected to an output device (30) of the agricultural machine (1) that is activated by a control device (28) of the agricultural machine (1), wherein the control device (28) is designed in such a way that, if a vehicle (36) is approaching the agricultural machine (1) laterally from the rear and is detected by the radar sensor (14, 24) and if at the same time a direction indicator (32, 34) of the agricultural machine (1) is set on the side of the agricultural machine (1) on which the vehicle (36) is approaching, the output device (30) is activated in such a way that a warning signal is output.

6. Agricultural machine (1) according to Claim 5, **characterized in that** the output device (30) has a noise generator and/or a light.

7. Agricultural machine (1) according to one of the preceding claims, **characterized in that** the environment detection device has an external camera (12).

8. Method for supporting a driver of a self-propelled agricultural machine (1) according to one of Claims 1-7 when driving the agricultural machine (1), wherein the agricultural machine (1) is a constituent part of an outfit (3) comprising the agricultural machine (1) and a trailer (2) or comprising the agricultural machine (1) and an attachment, wherein
- a vehicle (36) approaching the agricultural machine (1) from the rear is detected by means of a radar sensor (14, 24) arranged on a side exterior mirror (8, 10) of the agricultural machine (1),
- a check is made as to whether a direction indicator (32, 34) of the agricultural machine (1) is set,
- and a warning signal is output to the driver if the vehicle (36) is detected as approaching on the side of the agricultural machine (1) on which the direction indicator (32, 34) is set.

9. Method according to Claim 8, wherein
- a check is made as to whether a steering system of the agricultural machine (1) is turned, and
- the warning signal is output to the driver only if the steering system is turned to the side on which the direction indicator (32, 34) is set.

10. Method for supporting a driver of a self-propelled agricultural machine (1) according to one of Claims 1-7 when driving the agricultural machine (1), wherein the agricultural machine (1) is a constituent part of an outfit (3) comprising the agricultural machine (1) and a trailer (2) or comprising the agricultural machine (1) and an attachment, wherein
- a vehicle (36) approaching the agricultural machine (1) from the rear is detected by means of a radar sensor (14, 24) arranged on a side exterior mirror (8, 10) of the agricultural machine (1),
- a check is made as to whether the vehicle (36) is reducing its speed,
- and a warning signal is output to the driver if the vehicle (36) is not reducing its speed and if the vehicle (36) is detected as approaching on a side of the agricultural machine (1) on which there is a clear space (38) for the vehicle (36) beside the agricultural machine (1).

11. Method according to one of Claims 8 to 10, wherein the warning signal is output to the driver optically and/or acoustically.

## Revendications

1. Machine agricole autonome (1) comprenant une remorque (2) et/ou comprenant un outil porté, comprenant un rétroviseur extérieur latéral (8, 10) et comprenant un dispositif de détection d'environnement, **caractérisée en ce que** le dispositif de détection d'environnement présente un capteur radar (14, 24), le capteur radar (14, 24) étant disposé sur le rétroviseur extérieur latéral (8, 10) de telle sorte qu'une zone de détection (16) du capteur radar (14, 24) soit orientée vers l'arrière latéralement le long de la remorque (2) ou de l'outil porté et au-delà de la remorque (2) ou de l'outil porté, de telle sorte qu'au moyen du capteur radar (14, 24), une surveillance de l'espace de circulation vers l'arrière devant tout l'ensemble (3) constitué de la machine agricole (1) et de la remorque (2) ou de l'outil porté soit possible, aucuns capteurs supplémentaires sur la remorque (2) ou sur l'outil porté n'étant nécessaires à cette fin, et que le capteur radar (14, 24) soit disposé de manière déplaçable sur la machine agricole (1) dans la direction transversale par rapport à une direction longitudinale de véhicule (18) de la machine agricole (1).

2. Machine agricole (1) selon la revendication 1, **caractérisée en ce que** le capteur radar (14, 24) est disposé sur un corps du rétroviseur extérieur latéral (8, 10) ou sur un bras de retenue du rétroviseur extérieur latéral (8, 10).

3. Machine agricole (1) selon l'une des revendications précédentes, **caractérisée en ce que** le capteur radar (14, 24) présente, dans un plan horizontal, de manière tournée vers l'extérieur, une zone de détection (16) s'étendant sur un angle (α) d'au moins 50°, à partir de l'horizontale (20) croisant le capteur radar (14, 24), s'étendant parallèlement à l'axe longitudinal de véhicule (18).

4. Machine agricole (1) selon l'une des revendications précédentes, **caractérisée en ce que** le capteur radar (14, 24) présente, dans un plan vertical, de manière tournée vers le bas, une zone de détection (16) s'étendant sur un angle (β) d'au moins 5°, à partir de l'horizontale (20) croisant le capteur radar (14, 24), s'étendant parallèlement à l'axe longitudinal de véhicule (18).

5. Machine agricole (1) selon l'une des revendications précédentes, **caractérisée en ce que** le capteur radar (14, 24) est connecté à un dispositif de sortie (30) de la machine agricole (1) qui est commandé par un appareil de commande (28) de la machine agricole (1), l'appareil de commande (28) étant réalisé de telle sorte que, lorsqu'un véhicule (36) se rapproche latéralement, par l'arrière, de la machine agricole (1) et est détecté par le capteur (14, 24), et lorsqu'on même temps, un indicateur clignotant de direction (32, 34) de la machine agricole (1) est activé sur le côté de la machine agricole (1) dont lequel le véhicule (36) se rapproche, le dispositif de sortie (30) est commandé de telle sorte qu'un signal d'avertissement est délivré.

6. Machine agricole (1) selon la revendication 5, **caractérisée en ce que** le dispositif de sortie (30) présente un générateur de bruit et/ou un dispositif d'éclairage.

7. Machine agricole (1) selon l'une des revendications précédentes, **caractérisée en ce que** le dispositif de détection d'environnement présente une caméra externe (12).

8. Procédé d'aide à la conduite d'une machine agricole autonome (1) selon l'une des revendications 1 à 7 lors de la conduite de la machine agricole (1), dans lequel la machine agricole (1) fait partie d'un ensemble (3) constitué de la machine agricole (1) et d'une remorque (2) ou constitué de la machine agricole (1) et d'un outil porté, dans lequel
- au moyen d'un capteur radar (14, 24) disposé sur un rétroviseur extérieur latéral (8, 10) de la machine agricole (1), un véhicule (36) se rapprochant, par l'arrière, de la machine agricole (1) est détecté,
- on vérifie si un indicateur clignotant de direction (32, 34) de la machine agricole (1) est activé,
- et un signal d'avertissement est délivré au conducteur lorsqu'il est détecté que le véhicule (36) se rapproche du côté de la machine agricole (1) sur lequel l'indicateur clignotant de direction (32, 34) est activé.

9. Procédé selon la revendication 8, dans lequel
- on vérifie si une direction de la machine agricole (1) est braquée, et
- le signal d'avertissement n'est délivré au conducteur que si la direction est braquée vers le côté sur lequel l'indicateur clignotant de direction (32, 34) est activé.

10. Procédé d'aide à la conduite d'une machine agricole autonome (1) selon l'une des revendications 1 à 7 lors de la conduite de la machine agricole (1), dans lequel la machine agricole (1) fait partie d'un ensemble (3) constitué de la machine agricole (1) et d'une remorque (2) ou constitué de la machine agricole (1) et d'un outil porté, dans lequel
- au moyen d'un capteur radar (14, 24) disposé sur un rétroviseur extérieur latéral (8, 10) de la machine agricole (1), un véhicule (36) se rapprochant, par l'arrière, de la machine agricole (1) est détecté,
- on vérifie si le véhicule (36) réduit sa vitesse,
- et un signal d'avertissement est délivré au conducteur lorsque le véhicule (36) ne réduit pas sa vitesse et lorsqu'il est détecté que le véhicule (36) se rapproche d'un côté de la machine agricole (1) sur lequel un espace libre (38) pour le véhicule (36) est présent à côté de la machine agricole (1).

11. Procédé selon l'une des revendications 8 à 10, dans lequel le signal d'avertissement est délivré au conducteur de manière optique et/ou acoustique.
